(19)

**Europäisches Patentamt**

**European Patent Office**

**Office européen des brevets**

(11) **EP 3 716 518 B1**

(12) **EUROPEAN PATENT SPECIFICATION**

(45) Date of publication and mention
of the grant of the patent:
**19.04.2023  Bulletin 2023/16**

(21) Application number: **18896050.4**

(22) Date of filing: **23.11.2018**

(51) International Patent Classification (IPC):
*H04L 1/00* *(2006.01)*        *H04L 5/00* *(2006.01)*

(52) Cooperative Patent Classification (CPC):
**H04L 1/0026; H04L 1/0003; H04L 1/0009;**
**H04L 1/0016; H04L 1/0025; H04L 5/0044;**
**H04L 5/0057; H04L 5/0064; H04L 5/0091;**
H04L 5/0007; H04L 27/0008; H04L 27/206

(86) International application number:
**PCT/CN2018/117133**

(87) International publication number:
**WO 2019/128576 (04.07.2019 Gazette 2019/27)**

(54) **CHANNEL STATE INFORMATION TRANSMISSION METHOD, COMMUNICATION DEVICE, AND APPARATUS**

KANALSTATUSINFORMATIONSÜBERTRAGUNGSVERFAHREN, KOMMUNIKATIONSVORRICHTUNG UND EINRICHTUNG

PROCÉDÉ DE TRANSMISSION D'INFORMATIONS D'ÉTAT DE CANAL, DISPOSITIF DE COMMUNICATION ET APPAREIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.12.2017  CN 201711473505**
          **12.01.2018  CN 201810032021**
          **30.03.2018  CN 201810292329**

(43) Date of publication of application:
**30.09.2020  Bulletin 2020/40**

(73) Proprietor: **Datang Mobile Communications
Equipment Co., Ltd.
Beijing 100085 (CN)**

(72) Inventors:
• **SI, Qianqian
  Beijing 100191 (CN)**
• **GAO, Xuejuan
  Beijing 100191 (CN)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(56) References cited:
**EP-A1- 3 514 998          WO-A1-2017/171617**
**WO-A1-2018/231812          CN-A- 102 237 984**
**CN-A- 103 580 810          CN-A- 107 370 585**

• **"3rd Generation Partnership Project; Technical
  Specification Group Radio Access Network; NR;
  Multiplexing and channel coding (Release 15)",
  3GPP STANDARD; TECHNICAL SPECIFICATION;
  3GPP TS 38.212, 3RD GENERATION
  PARTNERSHIP PROJECT (3GPP), MOBILE
  COMPETENCE CENTRE ; 650, ROUTE DES
  LUCIOLES ; F-06921 SOPHIA-ANTIPOLIS
  CEDEX ; FRANCE, vol. RAN WG1, no. V1.2.1, 15
  December 2017 (2017-12-15), pages 1-82,
  XP051392002, [retrieved on 2017-12-15]**

- "3rd Generation Partnership Project; Technical Specification Group Radio Access Network; NR; Physical layer procedures for control (Release 15)", 3GPP DRAFT; R1-1721343_WITH_CHANGE_MARKS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 15 December 2017 (2017-12-15), XP051370849, Retrieved from the Internet: URL:http://www.3gpp.org/ftp/tsg%5Fran/WG1%5FRL1/TSGR1%5F91/Docs/ [retrieved on 2017-12-15]
- SAMSUNG: "Remaining Issues for UCI Multiplexing in PUSCH", 3GPP DRAFT; R1-1720332 UCI ON PUSCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20171109 - 20171113 18 November 2017 (2017-11-18), XP051369919, Retrieved from the Internet: URL:http://www.3gpp.org/ftp/tsg%5Fran/WG1%5FRL1/TSGR1%5F91/Docs/ [retrieved on 2017-11-18]
- "3rd Generation Partnership Project; Technical Specification Group Radio Access Network; NR; Physical layer procedures for data (Release 15)", 3GPP STANDARD; TECHNICAL SPECIFICATION; 3GPP TS 38.214, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V2.0.0, 15 December 2017 (2017-12-15), pages 1-71, XP051392021, [retrieved on 2017-12-15]

**Description**

**TECHNICAL FIELD**

The present disclosure relates to the field of communication technology, in particular to a Channel State Information (CSI) transmission method, a communication device, and an apparatus.

**BACKGROUND**

In a Long Term Evolution (LTE) wireless communication system, aperiodic CSI is transmitted through a Physical Uplink Shared Channel (PUSCH), and an evolved Node B (eNB) triggers a User Equipment (UE) to report the aperiodic CSI through Downlink Control Information (DCI) for scheduling uplink data. An information field in the DCI for scheduling the uplink data is used for triggering the report of the aperiodic CSI, and when the information field indicates that the UE needs to report the aperiodic CSI, the UE may report the aperiodic CSI through the PUSCH at a predefined position.

In the LTE system, a Rank Indication (RI) and a Channel Quality Indicator (CQI)/Precoding Matrix Indicator (PMI) in the CSI are encoded independently. When the PUSCH does not contain data and merely contains the transmission of control information, the RI is mapped to data symbols #1, #4, #7 and #10 (in the case of a normal Cyclic Prefix (CP)) or data symbols #0, #3, #5 and #8 (in the case of an extended CP) other than a Demodulation Reference Signal (DMRS), and the quantity of Resource Elements (REs) being occupied is determined through the equation

$$Q' = \min\left( \left\lceil \frac{O \times M_{sc}^{PUSCH} \times N_{symb}^{PUSCH} \times \beta_{offset}^{PUSCH}}{O_{CQI-MIN}} \right\rceil, 4 \times M_{sc}^{PUSCH} \right)$$

, where O represents the number of bits of the RI, $O_{CQI-MIN}$ represents the number of bits of the CQI including a Cyclic Redundancy Check (CRC) (when determining $O_{CQI-MIN}$, it is presumed that the RI for all serving cells triggering the aperiodic report is 1), $M_{sc}^{PUSCH}$ represents a bandwidth scheduled for the PUSCH within a current subframe through subcarriers, $N_{symb}^{PUSCH}$ represents the quantity of symbols scheduled for the PUSCH within the current subframe, and $\beta_{offset}^{PUSCH}$ represents a code rate offset of the RI relative to the CQI. Apart from a resource occupied by the RI, the other resource in the PUSCH is used for the transmission of CQI/PMI information.

Along with the development of the mobile communication services, such organizations as the International Telecommunication Union (ITU) and the 3rd-Generation Partnership Project (3GPP) have started to study new wireless communication systems (e.g., 5th-Generation (5G) New Radio (NR), or 5G new Radio Access Technology (RAT)). Currently, in a 5G NR system, the aperiodic CSI transmitted through the PUSCH may also include two parts, a first part of the CSI includes the RI and a first part of the CQI/PMI information, and a second part of the CSI includes the other CQI/PMI information. The first part of the CSI and the second part of the CSI are encoded and mapped independently.

Contents included in the two parts of the CSI in the 5G NR system are different from those in the LTE system, a design of the DMRS in the 5G NR system is also different from that in the LTE system, and the quantity of symbols occupied by the DMRS and positions of these symbols are not fixed, so it is impossible to use, in the 5G NR system, a CSI resource mapping mechanism for the LTE system. Currently, in the 5G NR system, there is no scheme for determining the resource for the transmission of each part of the CSI on the PUSCH when the PUSCH does not include the transmission of Uplink Shared Channel (UL-SCH) data.

"3rd Generation Partnership Project; Technical Specification Group Radio Access Network; NR; Multiplexing and channel coding (Release 15)", 3GPP STANDARD; TECHNICAL SPECIFICATION; 3GPP TS 38.212, 3RD GENERATION PARTNERSHIP PROJECT (3GPP), MOBILE COMPETENCE CENTRE; 650, ROUTE DES LUCIOLES ; F-06921 SOPHIA-ANTIPOLIS CEDEX ; FRANCE, vol. RAN WG1, no. V1 .2.1, 15 December 2017 (2017-12-15), pages 1-82, XP051392002) specifies the coding, multiplexing and mapping to physical channels for 5G NR.

SAMSUNG: "Remaining Issues for UCI Multiplexing in PUSCH", 3GPP DRAFT; R1-1720332 UCI ON PUSCH, 3RD GENERATION PARTNERSHIP PROJECT (3GPP), discusses configuration of CSI transmission in PUSCH without UL-SCH data.

**SUMMARY**

An object of the present disclosure is to provide a CSI transmission method and a device for determining a CSI transmission resource as defined in the annexed claims, so as to solve the problem in the related art where it is impossible to determine the resource for the transmission of each part of CSI on the PUSCH.

## BRIEF DESCRIPTION OF THE DRAWINGS

Fig.1 is a flow chart of a CSI transmission method according to an embodiment of the present disclosure;
Fig.2 is a schematic view showing a mapping resource for a first part of CSI and a second part of CSI on the PUSCH in the CSI transmission method according to an embodiment of the present disclosure;
Fig.3 is a schematic view showing a communication device according to an embodiment of the present disclosure; and
Fig.4 is a schematic view showing a device for determining a CSI transmission resource according to an embodiment of the present disclosure.

## DETAILED DESCRIPTION

In order to make the objects, the technical solutions and the advantages of the present disclosure more apparent, the present disclosure will be described hereinafter in details in conjunction with the drawings and embodiments.

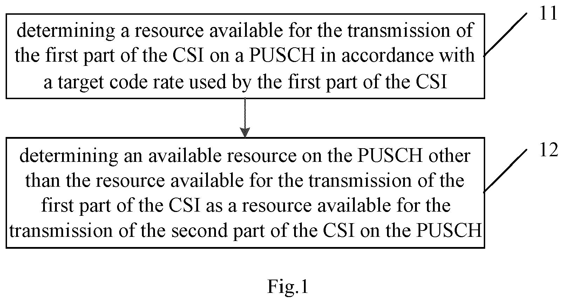

As shown in Fig.1, the present disclosure provides in some embodiments a CSI transmission method. CSI includes a first part and a second part. The CSI transmission method includes: Step 11 of determining a resource available for the transmission of the first part of the CSI on a PUSCH in accordance with a target code rate used by the first part of the CSI; and Step 12 of determining an available resource on the PUSCH other than the resource available for the transmission of the first part of the CSI as a resource available for the transmission of the second part of the CSI on the PUSCH.

In the embodiments of the present disclosure, the CSI may be aperiodic CSI, and the aperiodic CSI transmitted on the PUSCH includes the first part and the second part. The first part may include an RI and a part of a CQI/PMI, and the second part may include the other CQI/PMI information.

Preferably, in a possible embodiment of the present disclosure, prior to Step 11, the CSI transmission method may further include: receiving DCI from a base station; and parsing the DCI to determine that merely the CSI, rather than data, is transmitted through the PUSCH.

In other words, the CSI transmission method applies to a scenario where merely the CSI, rather than the data, is transmitted through the PUSCH. It should be appreciated that, the DCI may include an information field, and a content in the information field may be used to trigger the reporting of the CSI. When the information field indicates that a UE needs to report the CSI, the UE may report the CSI through the PUSCH at a predetermined position.

In the embodiment of the present disclosure, prior to Step 11, the CSI transmission method may further include Step 10 of acquiring the target code rate used by the first part of the CSI. The target code rate used by the first part of the CSI may be a value predefined in a protocol, a value configured through high-layer signaling, or a value indicated by a specific information field in the DCI for triggering the transmission of the PUSCH.

Preferably, the target code rate used by the first part of the CSI may be acquired in at least the following four modes, i.e., a communication device may determine the target code rate used by the first part of the CSI in any one of the following modes. In particular, the target code rate used by the first part of the CSI may be determined in any one of the following modes. It should be noted that among these modes only mode 3 corresponds to the claimed invention, the other modes being merely discussed for illustration purposes.

Mode 1: receiving the target code rate used by the first part of the CSI and configured by the base station through high-layer signaling.

In this mode, the base station may directly configure the target code rate used by the first part of the CSI.

Mode 2: receiving a set of code rates preconfigured by the base station and capable of being used by the first part of the CSI, receiving the DCI capable of triggering a UE to transmit the first part of the CSI, and determining one code rate in the set of code rates as the target code rate used by the first part of the CSI in accordance with indication information in a specific indication field of the DCI, the set of code rates including two or more code rates.

In this mode, the base station may preconfigure a set of code rates, and the set may include two or more code rates. Any code rate in the set may be used by the first part of the CSI as the target code rate used by the first part of the CSI. The code rate used by the first part of the CSI as the target code rate may be indicated through the specific indication field of the DCI, and the DCI may be capable of triggering the UE to transmit the first part of the CSI.

Mode 3: predefining in a protocol a set of code rates capable of being used by the first part of the CSI, receiving DCI capable of triggering the UE to transmit the first part of the CSI, and determining one code rate in the set of code rates as the target code rate used by the first part of the CSI in accordance with indication information in a specific indication field of the DCI, the set of code rates including two or more code rates.

In this mode, one set of code rates may be predefined in a protocol or standard, and the set may also include two or more code rates. Any code rate in the set may be used by the first part of the CSI as the target code rate used by the first part of the CSI. The code rate used by the first part of the CSI as the target code rate may be indicated through the specific indication field of the DCI, and the DCI may be capable of triggering the UE to transmit the first part of the CSI.

It should be appreciated that, in Mode 3, the specific indication field of the DCI is an HARQ process number indication information field. Indication information in the HARQ process number indication information field may be used to indicate a code rate associated with a modulation order of the first part of the CSI in a predetermined table in the protocol. The predetermined table in the protocol may be Table 6.1.4.1-1 in the 3GPP protocol 38.213. In other words, the code rate corresponding to the modulation order of the first part of the CSI in the Table 6.1.4.1-1 in the 3GPP protocol 38.213 may be indicated through the HARQ process number indication information field.

Preferably, in the case that the modulation order of the first part of the CSI is 2, information of three most significant bits or information of three least significant bits in the HARQ process number indication information field may be used to indicate eight code rates associated with the modulation order of 2 in the predetermined table in the protocol; in the case that the modulation order of the first part of the CSI is 4, information of three most significant bits or information of three least significant bits in the HARQ process number indication information field may be used to indicate seven code rates associated with the modulation order of 4 in the predetermined table in the protocol; and in the case that the modulation order of the first part of the CSI is 6, information of all bits in the HARQ process number indication information field may be used to indicate eleven code rates associated with the modulation order of 6 in the predetermined table in the protocol.

In a bit sequence, N most-significant bits may refer to N consecutive bits from a first most-significant bit in a descending order from most significant bit to least significant bit. The information of the three most significant bits in the HARQ process number indication information field may refer to information of three consecutive bits in the HARQ process number indication information field from a first most-significant bit in the descending order from most significant bit to least significant bit. The information of the three least significant bits in the HARQ process number indication information field may refer to information of three consecutive bits in the HARQ process number indication information field from a first least-significant bit in an ascending order from least significant bit to most significant bit.

It should be further appreciated that, usually the HARQ process number indication information field may occupy four bits.

Mode 4: predefining in a protocol a set of code rates capable of being used by the first part of the CSI, receiving high-layer signaling from the base station, and determining one code rate in the set of code rates as the target code rate used by the first part of the CSI in accordance with indication information in the high-layer signaling, the set of code rates including two or more code rates.

In this mode, one set of code rates may be predefined in a protocol or standard, and the set may also include two or more code rates. Any code rate in the set may be used by the first part of the CSI as the target code rate of the first part of the CSI. The code rate used by the first part of the CSI as the target code rate may be directly indicated by the base station through the high-layer signaling.

It should be appreciated that, the specific indication field of the DCI may include one or a combination of two or more of an MCS information field, an RV information field, an NDI information field, and an HARQ process number indication information field.

It should be further appreciated that, when the code rate in the set of code rates used by the first part of the CSI as the target code rate of the first part of the CSI is indicated through the DCI or the high-layer signaling from the base station, the indication information in the specific indication field of the DCI or the indication information in the high-layer signaling may directly indicate a certain code rate in the set, or indirectly indicate the code rate through indicating a certain code rate serial number in the set. For example, when the set of code rates is {0.08, 0.15, 0.25, 0.35, 0.45, 0.60, 0.80}, the indication information may directly indicate the target code rate of the first part of the CSI as 0.15, or indirectly indicate the target code rate as 0.15 through indicating the target code rate of the first part of the CSI as a second value in the set.

Preferably, Step 11 may include determining the quantity of REs available for the transmission of the first part of the CSI on the PUSCH in accordance with the target code rate used by the first part of the CSI, the quantity of information bits of the first part of the CSI and the modulation order of the first part of the CSI.

Preferably, the determining the quantity of the REs available for the transmission of the first part of the CSI on the PUSCH in accordance with the target code rate used by the first part of the CSI, the quantity of information bits of the first part of the CSI and the modulation order of the first part of the CSI may include: determining the quantity of the REs available for the transmission of the first part of the CSI on the PUSCH through a first formula

$$N_{\text{RE}}^{\text{CSI-part1}} = \left\lceil \frac{O_{CSI-part1}}{R_{T\arg et} * Q_m} \right\rceil$$

, where $N_{\text{RE}}^{\text{CSI-part1}}$ represents the quantity of the REs available for the transmission of the first part of the CSI on the PUSCH, $O_{CSI-part1}$ represents the quantity of information bits of the first part of the CSI, $R_{Target}$ represents the target code rate used by the first part of the CSI, and $Q_m$ represents the modulation order of the first part of the CSI.

It should be appreciated that, when the quantity of REs available for the transmission of the first part of the CSI on the PUSCH is greater than the quantity of REs available for the transmission of UCI on the PUSCH, all the REs available for the transmission of the UCI on the PUSCH may be determined as the REs available for the transmission of the first part of the CSI, and it determines there is no RE available for the transmission of the second part of the CSI on the PUSCH.

In other words, the quantity of REs available for the transmission of the UCI on the PUSCH may be set as an upper limit of the quantity of REs available for the transmission of the first part of the CSI. When the calculated quantity of REs available for the transmission of the first part of the CSI is greater than the quantity of REs available for the transmission of the UCI on the PUSCH, the quantity of REs available for the transmission of the first part of the CSI in current transmission may be set to be equal to the quantity of REs available for the transmission of the UCI on the PUSCH.

Further, in the embodiment of the present disclosure, Step 12 may include determining the quantity of REs available for the transmission of the second part of the CSI on the PUSCH in accordance with the quantity of REs available for the transmission of the UCI on the PUSCH and the quantity of REs available for the transmission of the first part of the CSI on the PUSCH.

Preferably, the determining the quantity of REs available for the transmission of the second part of the CSI on the PUSCH in accordance with the quantity of REs available for the transmission of UCI on the PUSCH and the quantity of REs available for the transmission of the first part of the CSI on the PUSCH may include: determining the quantity of REs available for the transmission of the second part of the CSI on the PUSCH through a second formula

$$N_{\text{RE}}^{\text{CSI-part2}} = N_{RE}^{PUSCH} - N_{\text{RE}}^{\text{CSI-part1}} - N_{\text{RE}}^{\text{HARQ-ACK}}$$

, where $N_{\text{RE}}^{\text{CSI-part2}}$ represents the quantity of REs available for the transmission of the second part of the CSI on the PUSCH, $N_{RE}^{PUSCH}$ represents the quantity of REs available for the transmission of the UCI on the PUSCH, $N_{\text{RE}}^{\text{CSI-part1}}$ represents the quantity of REs available for the transmission of the first part of the CSI on the PUSCH, and $N_{\text{RE}}^{\text{HARQ-ACK}}$ represents the quantity of REs available for the transmission of an HARQ-ACK on the PUSCH.

Briefly, the quantity of REs available for the transmission of the second part of the CSI on the PUSCH may be equal to a value acquired by subtracting the quantity of REs available for the transmission of the first part of the CSI on the PUSCH and the quantity of REs available for the transmission of the HARQ-ACK from the quantity of REs available for the transmission of the UCI on the PUSCH.

Further, the quantity $N_{RE}^{PUSCH}$ of REs available for the transmission of the UCI on the PUSCH may be calculated through a formula $$N_{\text{RE}}^{\text{PUSCH}} = \sum_{l=0}^{N_{\text{symb,all}}^{\text{PUSCH}} - n} M_{\text{sc}}^{\Phi^{\text{UCI}}}(l)$$ , where $N_{RE}^{PUSCH}$ represents the quantity of REs available for the transmission of the UCI on the PUSCH, $M_{\text{sc}}^{\Phi^{\text{UCI}}}(l)$ represents the quantity of REs available for the transmission of the UCI on an OFDM symbol $l$, $N_{symb,all}^{PUSCH}$ represents the quantity of OFDM symbols (including the OFDM symbols for transmitting the DMRS) in the PUSCH, and $n$ represents the quantity of OFDM symbols occupied by a DMRS in the PUSCH.

In a possible embodiment of the present disclosure, subsequent to Step 12, the CSI transmission method may further include: acquiring a code rate threshold of the second part of the CSI; and determining the quantity of bits of the second part of the CSI capable of being transmitted through the resource available for the transmission of the second part of the CSI on the PUSCH in accordance with the code rate threshold of the second part of the CSI.

Preferably, the acquiring the code rate threshold of the second part of the CSI may include determining the code rate threshold of the second part of the CSI through a third formula
$$R_{Threshold}^{CSI,2} = \frac{R_{T\arg et}^{CSI,1} * \beta_{offset}^{CSI,1}}{\beta_{offset}^{CSI,2}}$$
, where

$R_{Threshold}^{CSI,2}$ represents the code rate threshold of the second part of the CSI, $R_{T\arg et}^{CSI,1}$ represents the target code rate used by the first part of the CSI, $\beta_{offset}^{CSI,1}$ represents a code rate offset of the first part of the CSI, and $\beta_{offset}^{CSI,2}$ represents a code rate offset of the second part of the CSI.

Preferably, the determining the quantity of bits of the second part of the CSI capable of being transmitted through the resource available for the transmission of the second part of the CSI on the PUSCH in accordance with the code rate threshold of the second part of the CSI may include: when an actual code rate corresponding to the second part of the CSI is smaller than or equal to the code rate threshold of the second part of the CSI, determining the quantity of bits of the second part of the CSI capable of being transmitted through the resource available for the transmission of the second part of the CSI as the total quantity of bits of the second part of the CSI; and when the actual code rate corresponding to the second part of the CSI is greater than the code rate threshold of the second part of the CSI, discarding the second part of the CSI in accordance with a predetermined rule until an actual code rate corresponding to the remaining second part of the CSI is smaller than or equal to the code rate threshold of the second part of the CSI, and determining the quantity of bits of the second part of the CSI capable of being transmitted through the resource available for the transmission of the second part of the CSI as the quantity of bits of the remaining second part of the CSI.

To be specific, the actual code rate corresponding to the second part of the CSI may refer to an actual code rate corresponding to the total quantity of bits of the second part of the CSI. For example, when the second part of the CSI is modulated in a Quadrature Phase Shift Keying (QPSK) mode and includes totally 60 bits, the corresponding actual code rate may be 60/(50*2)=0.6.

In a word, in the embodiments of the present disclosure, the resource for the transmission of the second part of the CSI may probably be smaller than the actual resource to be occupied by the second part of the CSI, and in this case, the second part of the CSI may not be, as a whole, transmitted through the resource for the transmission of the second part of the CSI. At this time, it is necessary to determine the quantity of bits of the second part of the CSI capable of being transmitted through the resource available for the transmission of the second part of the CSI, so as to ensure that parts of the bits of the second part of the CSI are transmitted correctly through the resource available for the transmission of the second part of the CSI.

For example, the resource available for the transmission of the second part of the CSI on the PUSCH may include 50 REs, the second part of the CSI may be modulated in a QPSK mode, and the code rate threshold of the second part of the CSI may be 0.4.

When the second part of the CSI includes 60 bits, the corresponding actual code rate may be 60/(50*2)=0.6 which is greater than the code rate threshold of the second part of the CSI, i.e., 0.4. Depending on a discarding rule for the second part of the CSI, 30 bits may be discarded. For the remaining second part of the CSI having 30 bits, the actual code rate corresponding to the remaining second part of the CSI may be recalculated as 30/(50*2)=0.3 which is smaller than the code rate threshold of the second part of the CSI, i.e., 0.4. Hence, the second part of the CSI having 30 bits may be transmitted on the resource available for the transmission of the second part of the CSI.

The CSI transmission method will be described hereinafter in more details in conjunction with two embodiments.

First Embodiment

It is presumed that, as indicated by the base station through the DCI, merely aperiodic CSI, rather than data, is transmitted on the PUSCH. The aperiodic CSI may be divided into a first part and a second part. The first part of the CSI may include 50 bits, and the second part of the CSI may include 100 bits. When the base station has allocated 14 OFDM symbols and 2 RBs for the current transmission of the PUSCH and a first OFDM symbol has been occupied by a DMRS, the quantity of REs available for the transmission of the UCI may be 13*12*2=312.

At first, the target code rate used by the first part of the CSI may be acquired.

In a first mode, the base station may directly configure the target code rate used by the first part of the CSI as 0.15.

In a second mode, the base station may configure a set of code rates used by the first part of the CSI as {[0.08, 0.15, 0.25, 0.35, 0.45, 0.60, 0.80]}, and then indicate, through the DCI, the target code rate used by the first part of the CSI as 0.15.

In a third mode, a set of code rates used by the first part of the CSI may be defined in a standard as {[0.08, 0.15, 0.25, 0.35, 0.45, 0.60, 0.80]}, and the base station may indicate, through high-layer signaling, a second value, i.e., 0.15, as the target code rate used by the first part of the CSI.

In a fourth mode, the base station may indicate, through an MCS information field in the DCI, a modulation order of the first part of the CSI and the target code rate used by the first part of the CSI. For example, a column of target code rate may be added in an MCS table defined in the standard as the target code rate used by the first part of the CSI, as shown in Table 1, and merely $I_{MCS}$3~23 in the table may be used to indicate the modulation order of the first part of the CSI and the target code rate used by the first part of the CSI.

Table 1: MCS indication in PUSCH

| MCS index $I_{MCS}$ | Modulation order $Q_m$ | Target code rate [1024] R | Spectrum efficiency | Target code rate used by the first part of the CSI (on the PUSCH where no data is transmitted) |
|---|---|---|---|---|
| 0 | 2 | 120 | 0.2344 | |
| 1 | 2 | 157 | 0.3066 | |
| 2 | 2 | 193 | 0.3770 | |
| 3 | 2 | 251 | 0.4902 | 0.08 |
| 4 | 2 | 308 | 0.6016 | 0.15 |
| 5 | 2 | 379 | 0.7402 | 0.25 |
| 6 | 2 | 449 | 0.8770 | 0.35 |
| 7 | 2 | 526 | 1.0273 | 0.45 |
| 8 | 2 | 602 | 1.1758 | 0.60 |
| 9 | 2 | 679 | 1.3262 | 0.80 |
| 10 | 4 | 340 | 1.3281 | 0.08 |
| 11 | 4 | 378 | 1.4766 | 0.15 |
| 12 | 4 | 434 | 1.6953 | 0.25 |
| 13 | 4 | 490 | 1.9141 | 0.35 |
| 14 | 4 | 553 | 2.1602 | 0.45 |
| 15 | 4 | 616 | 2.4063 | 0.60 |
| 16 | 4 | 658 | 2.5703 | 0.80 |
| 17 | 6 | 438 | 2.5664 | 0.08 |
| 18 | 6 | 466 | 2.7305 | 0.15 |
| 19 | 6 | 517 | 3.0293 | 0.25 |
| 20 | 6 | 567 | 3.3223 | 0.35 |
| 21 | 6 | 616 | 3.6094 | 0.45 |
| 22 | 6 | 666 | 3.9023 | 0.60 |
| 23 | 6 | 719 | 4.2129 | 0.80 |
| 24 | 6 | 772 | 4.5234 | |
| 25 | 6 | 822 | 4.8164 | |
| 26 | 6 | 873 | 5.1152 | |
| 27 | 6 | 910 | 5.3320 | |
| 28 | 6 | 948 | 5.5547 | |
| 29 | 2 | reserved | | |
| 30 | 4 | reserved | | |
| 31 | 6 | reserved | | |

In a fifth mode, the base station may indicate, through the MCS information field in the DCI (one or more of the other information fields may not be excluded, e.g., an HARQ process indication information field, an RV indication field and an NDI indication field), the target code rate of the first part of the CSI and/or the modulation order of the first part of the CSI. For example, a target code rate in the MCS table defined in the standard may be taken as the target code rate used by the first part of the CSI, as shown in Table 2. $I_{MCS}$ 0~27 in the table may be used to indicate the target code rate used by the first part of the CSI and/or the modulation order of the first part of the CSI, and the MCS information field in the DCI (one or more of the other information fields may not be excluded, e.g., the HARQ process indication information field, the RV indication field and the NDI indication field) may be used to indicate which MCS index in the table is to be used.

Table 2: MCS indication in PUSCH

| MCS index $I_{MCS}$ | Modulation order $Q_m$ | Target code rate x 1024 R | Spectrum efficiency |
|---|---|---|---|
| 0 | 1 | 240 | 0.2344 |
| 1 | 1 | 314 | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 466 | 2.7305 |
| 18 | 6 | 517 | 3.0293 |
| 19 | 6 | 567 | 3.3223 |
| 20 | 6 | 616 | 3.6094 |
| 21 | 6 | 666 | 3.9023 |
| 22 | 6 | 719 | 4.2129 |
| 23 | 6 | 772 | 4.5234 |
| 24 | 6 | 822 | 4.8164 |
| 25 | 6 | 873 | 5.1152 |
| 26 | 6 | 910 | 5.3320 |
| 27 | 6 | 948 | 5.5547 |
| 28 | 1 | reserved | |
| 29 | 2 | reserved | |
| 30 | 4 | reserved | |
| 31 | 6 | reserved | |

In a sixth mode, the base station has acquired the modulation order of the first part of the CSI through the MCS information field as well as the NDI information field and/or the RV information field, and it may indicate, through the HARQ process indication information field in the DCI, a code rate associated with the modulation order of the first part of the CSI in a predetermined table in a protocol. The predetermined table in the protocol may be Table 6.1.4.1-1 in the 3GPP protocol 38.213. For example, Table 2 is Table 6.1.4.1-1 in the 3GPP protocol 38.213. When the modulation order of the first part of the CSI is 2, information of three most significant bits or information of three least significant bits in four bits of the HARQ process number indication information field may be used to indicate code rates corresponding to $I_{MCS}$ 2~9 in the table; when the modulation order of the CSI is 4, information of three most significant bits or information of three least significant bits in four bits of the HARQ process number indication information field may be used to indicate code rates corresponding to $I_{MCS}$ 10-16 in the table; and when the modulation order of the CSI is 6, information of the four bits of the HARQ process number indication information field may be used to indicate code rates corresponding to $I_{MCS}$ 18-27 in the table.

In this embodiment, the first part of the CSI may include 50 bits. When the first part of the CSI is modulated in

$$N_{RE}^{CSI\text{-}part1} = \left\lceil \frac{O_{CSI-part1}}{R_{Target} * Q_m} \right\rceil = \left\lceil \frac{50}{0.15*2} \right\rceil = 167$$

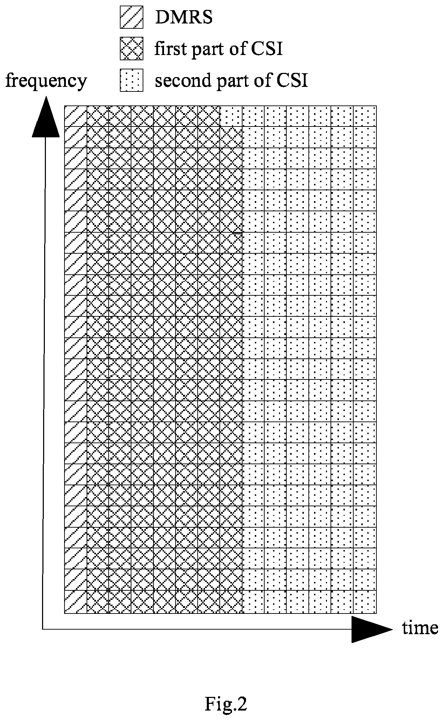

a QPSK mode and the target code rate is 0.15, , i.e., 167 REs in the PUSCH may be used for the transmission of the first part of the CSI. As shown in Fig.2, the REs indicated by "▨" may be used for the transmission of the DMRS, and the REs indicated by "⊠" may be used for the transmission of the first part of the CSI. For the REs available for the transmission of the second part of the CSI,

$$N_{RE}^{CSI\text{-}part2} = N_{RE}^{PUSCH} - N_{RE}^{CSI\text{-}part1} = 312 - 167 = 145$$

, and as shown in Fig.2, the REs indicated by "▦" may be used for the transmission of the second part of the CSI.

Second Embodiment

It is presumed that, as indicated by the base station through the DCI, merely aperiodic CSI, rather than data, is transmitted on the PUSCH. The aperiodic CSI may be divided into a first part and a second part. The first part of the CSI may include 50 bits, and the second part of the CSI may include 100 bits. When the base station has allocated 14 OFDM symbols and 1 RB for the current transmission of the PUSCH and a first OFDM symbol has been occupied by a DMRS, the quantity of REs available for the transmission of the UCI may be 13*12=156.

It is presumed that the target code rate in the MCS table (i.e., Table 1) defined in the protocol 38.214 is used as the target code rate used by the first part of the CSI. When the MCS index for the CSI transmission as indicated by the base station through the DCI is 0, the corresponding modulation order may be 2, and at this time, the target code rate used by the first part of the CSI may be 120/1024.

In this embodiment, the first part of the CSI may include 50 bits and may be modulated in a QPSK mode, so

$$N_{RE}^{CSI\text{-}part1} = \left\lceil \frac{O_{CSI-part1}}{R_{Target} * Q_m} \right\rceil = \left\lceil \frac{50}{120/1024*2} \right\rceil = 214$$

.

In this case, the quantity of REs occupied by the first part of the CSI may be 214, which is greater than the quantity of REs available for the transmission of the UCI on the PUSCH, i.e., 156, so the quantity of REs used by the first part of the CSI in the current transmission may be equal to the quantity of REs available for the transmission of the UCI on the PUSCH, and correspondingly, there exists no RE available for the transmission of the second part of the CSI on the PUSCH. In other words, merely the first part of the CSI may be transmitted on the PUSCH currently, and all the second part of the CSI may be discarded.

According to the embodiments of the present disclosure, when merely two parts of the CSI, rather than the data, are transmitted on the PUSCH, the resource available for the transmission of the first part of the CSI on the PUSCH may be determined in accordance with the target code rate used by the first part of the CSI, and the remaining available resource on the PUSCH may be determined as the resource available for the transmission of the second part of the CSI. As a result, it is able to correctly transmit the CSI on the PUSCH in a 5G NR system, thereby to ensure the performance of the 5G NR system.

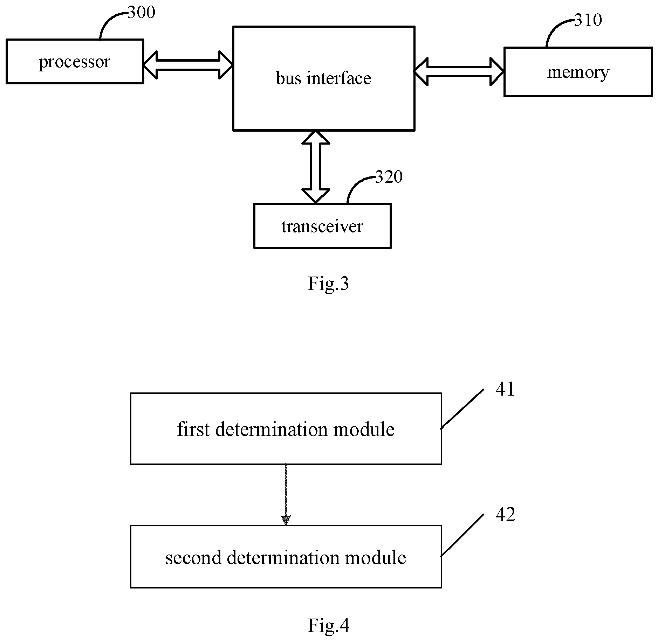

As shown in Fig.3, the present disclosure provides in some embodiments a communication device, which includes a memory 310, a processor 300, and a computer program stored in the memory 310 and executed by the processor 300. The processor 300 is configured to execute the computer program so as to: determine a resource available for the transmission of a first part of the CSI on a PUSCH in accordance with a target code rate used by the first part of the CSI; and determine an available resource on the PUSCH other than the resource available for the transmission of the first part of the CSI as a resource available for the transmission of a second part of the CSI on the PUSCH.

Preferably, the communication device may further include a transceiver 320 configured to acquire the target code rate used by the first part of the CSI.

Preferably, the transceiver 320 is further configured to: receive the target code rate used by the first part of the CSI and configured by a base station through high-layer signaling; or receive a set of code rates preconfigured by the base station and capable of being used by the first part of the CSI, receive DCI capable of triggering a UE to transmit the first part of the CSI, and determine one code rate in the set of code rates as the target code rate used by the first part of the CSI in accordance with indication information in a specific indication field of the DCI, the set of code rates including two or more code rates; or predefine in a protocol a set of code rates capable of being used by the first part of the CSI, receive DCI capable of triggering the UE to transmit the first part of the CSI, and determine one code rate in the set of code rates as the target code rate used by the first part of the CSI in accordance with indication information in a specific indication field of the DCI, the set of code rates including two or more code rates; or predefine in a protocol a set of code rates capable of being used by the first part of the CSI, receive high-layer signaling from the base station, and determine one code rate in the set of code rates as the target code rate used by the first part of the CSI in accordance with indication information in the high-layer signaling, the set of code rates including two or more code rates.

Preferably, in a possible embodiment of the present disclosure, the specific indication field of the DCI may include one or a combination of two or more of an MCS information field, an RV information field, an NDI information field, and an HARQ process number indication information field.

Preferably, in a possible embodiment of the present disclosure, in the case of predefining in the protocol the set of code rates capable of being used by the first part of the CSI and receiving the DCI capable of triggering the UE to transmit the first part of the CSI, the specific indication field of the DCI may be an HARQ process number indication information field, and indication information in the HARQ process number indication information field may be used to indicate a code rate associated with a modulation order of the first part of the CSI in a predetermined table in the protocol.

Preferably, in the embodiment of the present disclosure, in the case that the modulation order of the first part of the CSI is 2, information of three most significant bits or information of three least significant bits in the HARQ process number indication information field may be used to indicate eight code rates associated with the modulation order of 2 in the predetermined table in the protocol; in the case that the modulation order of the first part of the CSI is 4, information of three most significant bits or information of three least significant bits in the HARQ process number indication information field may be used to indicate seven code rates associated with the modulation order of 4 in the predetermined table in the protocol; and in the case that the modulation order of the first part of the CSI is 6, information of all bits in the HARQ process number indication information field may be used to indicate eleven code rates associated with the modulation order of 6 in the predetermined table in the protocol.

Preferably, in the embodiment of the present disclosure, the processor 300 is further configured to determine the quantity of REs available for the transmission of the first part of the CSI on the PUSCH in accordance with the target code rate used by the first part of the CSI, the quantity of information bits of the first part of the CSI and the modulation order of the first part of the CSI.

Preferably, in the embodiment of the present disclosure, the processor 300 is further configured to determine the quantity of the REs available for the transmission of the first part of the CSI on the PUSCH through a first formula

$$N_{\text{RE}}^{\text{CSI-part1}} = \left\lceil \frac{O_{CSI-part1}}{R_{T\arg et} * Q_m} \right\rceil$$

, where $N_{\text{RE}}^{\text{CSI-part1}}$ represents the quantity of the REs available for the transmission of the first part of the CSI on the PUSCH, $O_{CSI-part1}$ represents the quantity of information bits of the first part of the CSI, $R_{Target}$ represents the target code rate used by the first part of the CSI, and $Q_m$ represents the modulation order of the first part of the CSI.

Preferably, in the embodiment of the present disclosure, the processor 300 is further configured to determine the quantity of REs available for the transmission of the second part of the CSI on the PUSCH in accordance with the quantity of REs available for the transmission of UCI on the PUSCH and the quantity of REs available for the transmission of the first part of the CSI on the PUSCH.

Preferably, in the embodiment of the present disclosure, the processor 300 is further configured to determine the quantity of REs available for the transmission of the second part of the CSI on the PUSCH through a second formula

$$N_{\text{RE}}^{\text{CSI-part2}} = N_{RE}^{PUSCH} - N_{\text{RE}}^{\text{CSI-part1}} - N_{\text{RE}}^{\text{HARQ-ACK}}$$

, where $N_{\text{RE}}^{\text{CSI-part2}}$ represents the quantity of REs available for the transmission of the second part of the CSI on the PUSCH, $N_{RE}^{PUSCH}$ represents the quantity of REs available for the transmission of the UCI on the PUSCH, $N_{RE}^{\text{CSI-part1}}$ represents the quantity of REs available for the transmission of the first part of the CSI on the PUSCH, and $N_{RE}^{\text{HARQ-ACK}}$ represents the quantity of REs available for the transmission of an HARQ-ACK on the PUSCH.

Preferably, in the embodiment of the present disclosure, the processor 300 is further configured to calculate the quantity $N_{RE}^{PUSCH}$ of REs available for the transmission of the UCI on the PUSCH through a formula

$$N_{\text{RE}}^{\text{PUSCH}} = \sum_{l=0}^{N_{\text{symb,all}}^{\text{PUSCH}}-n} M_{\text{sc}}^{\Phi^{\text{UCI}}}(l)$$

, where $N_{RE}^{PUSCH}$ represents the quantity of REs available for the transmission of the UCI on the PUSCH, $M_{\text{sc}}^{\Phi^{\text{UCI}}}(l)$ represents the quantity of REs available for the transmission of the UCI on an OFDM symbol $l$, $N_{symb,all}^{PUSCH}$ represents the quantity of OFDM symbols in the PUSCH, and $n$ represents the quantity of OFDM symbols occupied by a DMRS in the PUSCH.

Preferably, in the embodiment of the present disclosure, the processor 300 is further configured to, when the quantity of REs available for the transmission of the first part of the CSI on the PUSCH is greater than the quantity of REs available for the transmission of the UCI on the PUSCH, determine the REs available for the transmission of the UCI on the PUSCH as the REs available for the transmission of the first part of the CSI, and determine that there is no RE available for the transmission of the second part of the CSI on the PUSCH.

Preferably, in the embodiment of the present disclosure, the transceiver 320 is further configured to receive the DCI transmitted by the base station, and the processor 300 is further configured to parse the DCI to determine that merely the CSI, rather than data, is transmitted through the PUSCH.

Preferably, in the embodiment of the present disclosure, the processor 300 is further configured to: acquire a code rate threshold of the second part of the CSI; and determine the quantity of bits of the second part of the CSI capable of being transmitted through the resource available for the transmission of the second part of the CSI on the PUSCH in accordance with the code rate threshold of the second part of the CSI.

Preferably, in the embodiment of the present disclosure, the processor 300 is further configured to determine the code rate threshold of the second part of the CSI through a third formula $R_{Threshold}^{CSI,2} = \dfrac{R_{Target}^{CSI,1} * \beta_{\text{offset}}^{\text{CSI},1}}{\beta_{\text{offset}}^{\text{CSI},2}}$, where $R_{Threshold}^{CSI,2}$ represents the code rate threshold of the second part of the CSI, $R_{Target}^{CSI,1}$ represents the target code rate used by the first part of the CSI, $\beta_{\text{offset}}^{\text{CSI},1}$ represents a code rate offset of the first part of the CSI, and $\beta_{\text{offset}}^{\text{CSI},2}$ represents a code rate offset of the second part of the CSI.

Preferably, in the embodiment of the present disclosure, the processor 300 is further configured to: when an actual code rate corresponding to the second part of the CSI is smaller than or equal to the code rate threshold of the second part of the CSI, determine the quantity of bits of the second part of the CSI capable of being transmitted through the resource available for the transmission of the second part of the CSI as the total quantity of bits of the second part of the CSI; and when the actual code rate corresponding to the second part of the CSI is greater than the code rate threshold of the second part of the CSI, discard the second part of the CSI in accordance with a predetermined rule until an actual code rate corresponding to the remaining second part of the CSI is smaller than or equal to the code rate threshold of the second part of the CSI, and determine the quantity of bits of the second part of the CSI capable of being transmitted through the resource available for the transmission of the second part of the CSI as the quantity of bits of the remaining second part of the CSI.

According to the embodiments of the present disclosure, when merely two parts of the CSI, rather than the data, are transmitted on the PUSCH, the resource available for the transmission of the first part of the CSI on the PUSCH may be determined in accordance with the target code rate used by the first part of the CSI, and the remaining available resource on the PUSCH may be taken as the resource available for the transmission of the second part of the CSI. As a result, it is able to correctly transmit the CSI on the PUSCH in a 5G NR system, thereby to ensure the performance of the 5G NR system.

It should be appreciated that, the communication device in the embodiments of the present disclosure is capable of implementing the above-mentioned CSI transmission method, and the implementation of the communication device may refer to that of the above CSI transmission method with a same or similar beneficial effect.

As shown in Fig.4, the present disclosure further provides in some embodiments an apparatus for determining a CSI transmission resource. CSI includes a first part and a second part. The apparatus for determining the CSI transmission resource includes: a first determination module 41 configured to determine a resource available for the transmission of the first part of the CSI on a PUSCH in accordance with a target code rate used by the first part of the CSI; and a second determination module 42 configured to determine an available resource on the PUSCH other than the resource available for the transmission of the first part of the CSI as a resource available for the transmission of the second part of the CSI on the PUSCH.

Preferably, in the embodiment of the present disclosure, the apparatus for determining the CSI transmission resource may further include an acquisition module configured to acquire the target code rate used by the first part of the CSI.

Preferably, in the embodiment of the present disclosure, the acquisition module may include: a first acquisition sub-module configured to receive the target code rate used by the first part of the CSI and configured by a base station through high-layer signaling; and/or a second acquisition sub-module configured to receive a set of code rates preconfigured by the base station and capable of being used by the first part of the CSI, receive DCI capable of triggering a UE to transmit the first part of the CSI, and determine one code rate in the set of code rates as the target code rate used by the first part of the CSI in accordance with indication information in a specific indication field of the DCI, the set of code rates including two or more code rates; and/or a third acquisition sub-module configured to predefine in a protocol a set of code rates capable of being used by the first part of the CSI, receive DCI capable of triggering the UE to transmit the first part of the CSI, and determine one code rate in the set of code rates as the target code rate used by the first part of the CSI in accordance with indication information in a specific indication field of the DCI, the set of code rates including two or more code rates; and/or a fourth acquisition sub-module configured to predefine in a protocol a set of code rates capable of being used by the first part of the CSI, receive high-layer signaling from the base station, and determine one code rate in the set of code rates as the target code rate used by the first part of the CSI in accordance with indication information in the high-layer signaling, the set of code rates including two or more code rates.

Preferably, in the embodiment of the present disclosure, the specific indication field of the DCI may include one or a combination of two or more of an MCS information field, an RV information field, an NDI information field, and an HARQ process number indication information field.

Preferably, in the embodiment of the present disclosure, the first determination module 41 may include a first determination sub-module configured to determine the quantity of REs available for the transmission of the first part of the CSI on the PUSCH in accordance with the target code rate used by the first part of the CSI, the quantity of information bits of the first part of the CSI and the modulation order of the first part of the CSI.

Preferably, in the embodiment of the present disclosure, the first determination sub-module may include a first determination unit configured to determine the quantity of the REs available for the transmission of the first part of the

$$N_{\text{RE}}^{\text{CSI-part1}} = \left\lceil \frac{O_{CSI-part1}}{R_{Target} * Q_m} \right\rceil$$

CSI on the PUSCH through a first formula, where $N_{\text{RE}}^{\text{CSI-part1}}$ represents the quantity of the REs available for the transmission of the first part of the CSI on the PUSCH, $O_{CSI-part1}$ represents the quantity of information bits of the first part of the CSI, $R_{Target}$ represents the target code rate used by the first part of the CSI, and $Q_m$ represents the modulation order of the first part of the CSI.

Preferably, in the embodiment of the present disclosure, the second determination module may include a second determination sub-module configured to determine the quantity of REs available for the transmission of the second part of the CSI on the PUSCH in accordance with the quantity of REs available for the transmission of UCI on the PUSCH and the quantity of REs available for the transmission of the first part of the CSI on the PUSCH.

Preferably, in the embodiment of the present disclosure, the second determination sub-module may include a second determination unit configured to determine the quantity of REs available for the transmission of the second part of the CSI on the PUSCH through a second formula $N_{\text{RE}}^{\text{CSI-part2}} = N_{RE}^{PUSCH} - N_{\text{RE}}^{\text{CSI-part1}} - N_{\text{RE}}^{\text{HARQ-ACK}}$, where $N_{\text{RE}}^{\text{CSI-part2}}$ represents the quantity of REs available for the transmission of the second part of the CSI on the PUSCH, $N_{RE}^{PUSCH}$ represents the quantity of REs available for the transmission of the UCI on the PUSCH, $N_{\text{RE}}^{\text{CSI-part1}}$ represents

the quantity of REs available for the transmission of the first part of the CSI on the PUSCH, and $N_{\text{RE}}^{\text{HARQ-ACK}}$ represents the quantity of REs available for the transmission of an HARQ-ACK on the PUSCH.

Preferably, in the embodiment of the present disclosure, the quantity $N_{RE}^{PUSCH}$ of REs available for the transmission of the UCI on the PUSCH may be calculated through a formula $N_{\text{RE}}^{\text{PUSCH}} = \sum_{l=0}^{N_{\text{symb,all}}^{\text{PUSCH}} - n} M_{\text{sc}}^{\Phi^{\text{UCI}}}(l)$, where $N_{RE}^{PUSCH}$ represents the quantity of REs available for the transmission of the UCI on the PUSCH, $M_{\text{sc}}^{\Phi^{\text{UCI}}}(l)$ represents the quantity of REs available for the UCI on an OFDM symbol $l$, $N_{symb,all}^{PUSCH}$ represents the quantity of OFDM symbols in the PUSCH, and $n$ represents the quantity of OFDM symbols occupied by a DMRS in the PUSCH.

Preferably, in the embodiment of the present disclosure, the apparatus for determining the CSI transmission resource may further include a processing module configured to, when the quantity of REs available for the transmission of the first part of the CSI on the PUSCH is greater than the quantity of REs available for the transmission of the UCI on the PUSCH, determine the REs available for the transmission of the UCI on the PUSCH as the REs available for the transmission of the first part of the CSI, and determine that there is no RE available for the transmission of the second part of the CSI on the PUSCH.

Preferably, in the embodiment of the present disclosure, the apparatus for determining the CSI transmission resource may further include: a reception module configured to receive the DCI from the base station; and a parsing module configured to parse the DCI to determine that merely the CSI, rather than data, is transmitted through the PUSCH.

Preferably, in the embodiment of the present disclosure, the apparatus for determining the CSI transmission resource may further include: a threshold acquisition module configured to acquire a code rate threshold of the second part of the CSI; and a bit determination module configured to determine the quantity of bits of the second part of the CSI capable of being transmitted through the resource available for the transmission of the second part of the CSI on the PUSCH in accordance with the code rate threshold of the second part of the CSI.

Preferably, in the embodiment of the present disclosure, the threshold acquisition module may include a threshold acquisition sub-module configured to determine the code rate threshold of the second part of the CSI through a third formula $R_{Threshold}^{CSI,2} = \dfrac{R_{T\arg et}^{CSI,1} * \beta_{\text{offset}}^{CSI,1}}{\beta_{\text{offset}}^{CSI,2}}$, where $R_{Threshold}^{CSI,2}$ represents the code rate threshold of the second part of the CSI, $R_{T\arg et}^{CSI,1}$ represents the target code rate used by the first part of the CSI, $\beta_{\text{offset}}^{CSI,1}$ represents a code rate offset of the first part of the CSI, and $\beta_{\text{offset}}^{CSI,2}$ represents a code rate offset of the second part of the CSI.

Preferably, in the embodiment of the present disclosure, the bit determination module may include: a first bit determination sub-module configured to, when an actual code rate corresponding to the second part of the CSI is smaller than or equal to the code rate threshold of the second part of the CSI, determine the quantity of bits of the second part of the CSI capable of being transmitted through the resource available for the transmission of the second part of the CSI as the total quantity of bits of the second part of the CSI; and a second bit determination sub-module configured to, when the actual code rate corresponding to the second part of the CSI is greater than the code rate threshold of the second part of the CSI, discard the second part of the CSI in accordance with a predetermined rule until an actual code rate corresponding to the remaining second part of the CSI is smaller than or equal to the code rate threshold of the second part of the CSI, and determine the quantity of bits of the second part of the CSI capable of being transmitted through the resource available for the transmission of the second part of the CSI as the quantity of bits of the remaining second part of the CSI.

According to the embodiments of the present disclosure, when merely two parts of the CSI, rather than the data, are transmitted on the PUSCH, the resource available for the transmission of the first part of the CSI on the PUSCH may be determined in accordance with the target code rate used by the first part of the CSI, and the remaining available resource on the PUSCH may be determined as the resource available for the transmission of the second part of the CSI. As a result, it is able to correctly transmit the CSI on the PUSCH in a 5G NR system, thereby to ensure the performance of the 5G NR system.

It should be appreciated that, the apparatus for determining the CSI transmission resource in the embodiments of the present disclosure is capable of implementing the above-mentioned CSI transmission method, and the implementation of the apparatus for determining the CSI transmission resource may refer to that of the above CSI transmission method with a same or similar beneficial effect.

The present disclosure further provides in some embodiments a computer-readable storage medium storing therein a computer program. The computer program is executed by a processor so as to implement the above-mentioned CSI transmission method with a same technical effect, which will not be particularly defined herein. The computer-readable storage medium may be a Read-Only Memory (ROM), a Random Access Memory (RAM), a magnetic disk, an optical disk, or the like.

It should be appreciated that, such terms as "include" or "including" or any other variations involved in the present disclosure intend to provide non-exclusive coverage, so that a procedure, method, article or device including a series of elements may also include any other elements not listed herein, or may include any inherent elements of the procedure, method, article or device. If without any further limitations, for the elements defined by such sentence as "including one ...", it is not excluded that the procedure, method, article or device including the elements may also include any other identical elements.

Through the above-mentioned description, it may be apparent for a person skilled in the art that the present disclosure may be implemented by software as well as a necessary common hardware platform, or by hardware, and the former may be better in most cases. Based on this, the technical solutions of the present disclosure, essentially, or parts of the technical solutions of the present disclosure contributing to the related art, may appear in the form of software products, which may be stored in a storage medium (e.g., ROM/ RAM, magnetic disk or optical disk) and include instructions so as to enable a terminal device (e.g., mobile phone, computer, server, air conditioner or network device) to execute the methods in the embodiments of the present disclosure.

The embodiments of the present disclosure have been described above with reference to the drawings, but the present disclosure is not limited to the above-mentioned specific implementations. The scope of protection of the present invention shall be exclusively defined by the claims, which should be interpreted in the light of this description.

**Claims**

1. A Channel State Information, CSI, transmission method at a User Equipment, UE, CSI comprising a first part and a second part, the CSI transmission method comprising

   determining (11) a resource available for transmission of the first part of the CSI on a Physical Uplink Shared Channel, PUSCH, without Uplink Shared Channel, UL-SCH, in accordance with a target code rate used by the first part of the CSI;
   determining (12) an available resource on the PUSCH other than the resource available for the transmission of the first part of the CSI as a resource available for transmission of the second part of the CSI on the PUSCH, wherein prior to determining the resource available for the transmission of the first part of the CSI on the PUSCH in accordance with the target code rate used by the first part of the CSI, the CSI transmission method further comprises:
   acquiring the target code rate used by the first part of the CSI,
   wherein the acquiring the target code rate used by the first part of the CSI comprises:
   predefining in a protocol a set of code rates capable of being used by the first part of the CSI, receiving DCI capable of triggering the UE to transmit the first part of the CSI, and determining one code rate in the set of code rates as the target code rate used by the first part of the CSI in accordance with indication information in a specific indication field of the DCI, the set of code rates comprising two or more code rates, said method **characterized in that** the specific indication field of the DCI is a Hybrid Automatic Repeat reQuest, HARQ, process number indication information field.

2. The CSI transmission method according to claim 1, wherein the determining the resource available for the transmission of the first part of the CSI on the PUSCH in accordance with the target code rate used by the first part of the CSI comprises:
   determining the quantity of Resource Elements, REs, available for the transmission of the first part of the CSI on the PUSCH in accordance with the target code rate used by the first part of the CSI, the quantity of information bits of the first part of the CSI and the modulation order of the first part of the CSI

3. The CSI transmission method according to claim 1, wherein the determining the quantity of the REs available for the transmission of the first part of the CSI on the PUSCH in accordance with the target code rate used by the first part of the CSI, the quantity of information bits of the first part of the CSI and the modulation order of the first part of the CSI comprises:

determining the quantity of the REs required for the transmission of the first part of the CSI on the PUSCH through a first formula

$$N_{\text{RE}}^{\text{CSI-part1}} = \left\lceil \frac{O_{CSI-part1}}{R_{T\arg et} * Q_m} \right\rceil ,$$

where $N_{\text{RE}}^{\text{CSI-part1}}$ represents the quantity of the REs available for the transmission of the first part of the CSI on the PUSCH, $O_{CSI\text{-}part1}$ represents the quantity of information bits of the first part of the CSI, $R_{T\,arget}$ represents the target code rate used by the first part of the CSI, and $Q_m$ represents the modulation order of the first part of the CSI.

4. The CSI transmission method according to claim 2 or 3, wherein the determining the available resource on the PUSCH other than the resource available for the transmission of the first part of the CSI as the resource available for the transmission of the second part of the CSI on the PUSCH comprises:
determining the quantity of REs available for the transmission of the second part of the CSI on the PUSCH in accordance with the quantity of REs available for the transmission of Uplink Control Information, UCI, on the PUSCH and the quantity of REs available for the transmission of the first part of the CSI on the PUSCH.

5. The CSI transmission method according to claim 4, wherein the determining the quantity of REs available for the transmission of the second part of the CSI on the PUSCH in accordance with the quantity of REs available for the transmission of UCI on the PUSCH and the quantity of REs available for the transmission of the first part of the CSI on the PUSCH comprises:

determining the quantity of REs available for the transmission of the second part of the CSI on the PUSCH through a second formula $N_{\text{RE}}^{\text{CSI-part2}} = N_{RE}^{PUSCH} - N_{\text{RE}}^{\text{CSI-part1}} - N_{\text{RE}}^{\text{HARQ-ACK}}$ ,

where $N_{\text{RE}}^{\text{CSI-part2}}$ represents the quantity of REs available for the transmission of the second part of the CSI on the PUSCH, $N_{RE}^{PUSCH}$ represents the quantity of REs available for the transmission of the UCI on the PUSCH, $N_{\text{RE}}^{\text{CSI-part1}}$ represents the quantity of REs available for the transmission of the first part of the CSI on the PUSCH, and $N_{\text{RE}}^{\text{HARQ-ACK}}$ represents the quantity of REs available for the transmission of an HARQ Acknowledgement, HARQ-ACK, on the PUSCH.

6. The CSI transmission method according to claim 5, wherein the quantity $N_{RE}^{PUSCH}$ of REs available for the transmission of the UCI on the PUSCH is calculated through a formula

$$N_{\text{RE}}^{\text{PUSCH}} = \sum_{l=0}^{N_{\text{symb,all}}^{\text{PUSCH}}-n} M_{\text{sc}}^{\Phi^{\text{UCI}}}\left(l\right),$$

where $N_{RE}^{PUSCH}$ represents the quantity of REs available for the transmission of the UCI on the PUSCH, $M_{\text{sc}}^{\Phi^{\text{UCI}}}\left(l\right)$ represents the quantity of REs available for the transmission of the UCI on an Orthogonal Frequency Division Multiplexing, OFDM, symbol $l$, $N_{symb,all}^{PUSCH}$ represents the quantity of OFDM symbols in the PUSCH, and $n$ represents the quantity of OFDM symbols occupied by a Demodulation Reference Signal, DMRS, in the PUSCH.

7. The CSI transmission method according to claim 3, wherein subsequent to determining the quantity of REs available for the transmission of the first part of the CSI on the PUSCH, the CSI transmission method further comprises:

when the quantity of REs required for the transmission of the first part of the CSI on the PUSCH calculated through the first formula is greater than the quantity of REs available for the transmission of the UCI on the PUSCH, determining the REs available for the transmission of the UCI on the PUSCH as the REs available for the transmission of the first part of the CSI, and determining that there is no RE available for the transmission of the second part of the CSI on the PUSCH.

8. The CSI transmission method according to claim 1, wherein prior to determining the resource available for the transmission of the first part of the CSI on the PUSCH in accordance with the target code rate used by the first part of the CSI, the CSI transmission method further comprises:

receiving the DCI transmitted by the base station;
parsing the DCI to determine that merely the CSI, rather than data, is transmitted through the PUSCH.

9. The CSI transmission method according to claim 1, wherein subsequent to determining the available resource on the PUSCH other than the resource available for the transmission of the first part of the CSI as the resource available for the transmission of the second part of the CSI on the PUSCH, the CSI transmission method further comprises:

acquiring a code rate threshold of the second part of the CSI;
determining the quantity of bits of the second part of the CSI capable of being transmitted through the resource available for the transmission of the second part of the CSI on the PUSCH in accordance with the code rate threshold of the second part of the CSI.

10. The CSI transmission method according to claim 9, wherein the acquiring the code rate threshold of the second part of the CSI comprises:

determining the code rate threshold of the second part of the CSI through a third formula

$$R_{Threshold}^{CSI,2} = \frac{R_{T\arg et}^{CSI,1} * \beta_{offset}^{CSI,1}}{\beta_{offset}^{CSI,2}},$$

where $R_{Threshold}^{CSI,2}$ represents the code rate threshold of the second part of the CSI, $R_{T\arg et}^{CSI,1}$ represents the target code rate used by the first part of the CSI, $\beta_{offset}^{CSI,1}$ represents a code rate offset of the first part of the CSI, and $\beta_{offset}^{CSI,2}$ represents a code rate offset of the second part of the CSI.

11. The CSI transmission method according to claim 9, wherein the determining the quantity of bits of the second part of the CSI capable of being transmitted through the resource available for the transmission of the second part of the CSI on the PUSCH in accordance with the code rate threshold of the second part of the CSI comprises:

when an actual code rate corresponding to the second part of the CSI is smaller than or equal to the code rate threshold of the second part of the CSI, determining the quantity of bits of the second part of the CSI capable of being transmitted through the resource available for the transmission of the second part of the CSI as the total quantity of bits of the second part of the CSI;
when the actual code rate corresponding to the second part of the CSI is greater than the code rate threshold of the second part of the CSI, discarding the second part of the CSI in accordance with a predetermined rule until an actual code rate corresponding to the remaining second part of the CSI is smaller than or equal to the code rate threshold of the second part of the CSI, and determining the quantity of bits of the second part of the CSI capable of being transmitted through the resource available for the transmission of the second part of the CSI as the quantity of bits of the remaining second part of the CSI.

12. A User Equipment, UE, configured to determine a Channel State Information, CSI, transmission resource, CSI comprising a first part and a second part, the UE comprising:

a first determination module (41) configured to determine a resource available for the transmission of the first part of the CSI on a Physical Uplink Shared Channel, PUSCH, without Uplink Shared Channel, UL-SCH, in accordance with a target code rate used by the first part of the CSI;

a second determination module (42) configured to determine an available resource on the PUSCH other than the resource available for the transmission of the first part of the CSI as a resource available for transmission of the second part of the CSI on the PUSCH;

an acquisition module, configured to acquire the target code rate used by the first part of the CSI, wherein the acquisition module comprises:

an acquisition sub-module configured to predefine in a protocol a set of code rates capable of being used by the first part of the CSI, receive Downlink Control Information, DCI, capable of triggering the UE to transmit the first part of the CSI, and determine one code rate in the set of code rates as the target code rate used by the first part of the CSI in accordance with indication information in a specific indication field of the DCI, the set of code rates comprising two or more code rates; said UE **characterized in that** the specific indication field of the DCI is a Hybrid Automatic Repeat reQuest, HARQ, process number indication information field.

**Patentansprüche**

1. Verfahren zur Übertragung von Kanalzustandsinformationen, CSI, an einem User-Gerät, UE, wobei die CSI einen ersten Teil und einen zweiten Teil aufweisen, wobei das CSI-Übertragungsverfahren die folgenden Schritte aufweist:

Bestimmen (11) einer für die Übertragung des ersten Teils der CSI auf einem Physical Uplink Shared Channel, PUSCH, ohne Uplink Shared Channel, UL-SCH, verfügbaren Ressource entsprechend einer Ziel-Code-Rate, die von dem ersten Teil der CSI verwendet wird;
Bestimmen (12) einer verfügbaren Ressource auf dem PUSCH, die von der für die Übertragung des ersten Teils der CSI verfügbaren Ressource verschieden ist, als eine für die Übertragung des zweiten Teils der CSI auf dem PUSCH verfügbare Ressource,
wobei das CSI-Übertragungsverfahren vor dem Bestimmen (11) der für die Übertragung des ersten Teils der CSI auf dem PUSCH verfügbaren Ressource entsprechend einer Ziel-Code-Rate, die von dem ersten Teil der CSI verwendet wird, ferner den folgenden Schritt aufweist:
Erfassen der von dem ersten Teil der CSI verwendeten Ziel-Code-Rate,
wobei das Erfassen der von dem ersten Teil der CSI verwendeten Ziel-Code-Rate die folgenden Schritte aufweist:

Vordefinieren, in einem Protokoll, einer Gruppe von Code-Raten, welche von dem ersten Teil der CSI verwendbar sind, Empfangen von DCI, die geeignet sind, das UE zum Übertragen des ersten Teils der CSI zu triggern, und Bestimmen einer Code-Rate in der Gruppe von Code-Raten als die von dem ersten Teil der CSI verwendete Ziel-Code-Rate gemäß Indikationsinformationen in einem spezifischen Indikationsfeld der DCI, wobei die Gruppe von Code-Raten zwei oder mehr Code-Raten aufweist,
wobei das Verfahren **dadurch gekennzeichnet ist, dass** das spezifische Indikationsfeld der DCI ein Hybrid Automatic Repeat reQuest(HARQ)-Prozessnum-merindikationsinformationsfeld ist.

2. CSI-Übertragungsverfahren nach Anspruch 1, bei welchem das Bestimmen der für die Übertragung des ersten Teils der CSI auf dem PUSCH verfügbaren Ressource entsprechend einer Ziel-Code-Rate, die von dem ersten Teil der CSI verwendet wird, den folgenden Schritt aufweist:
Bestimmen der Menge von Ressourcenelementen, REs, die für die Übertragung des ersten Teils der CSI auf dem PUSCH verfügbar ist, entsprechend der von dem ersten Teil der CSI verwendeten Ziel-Code-Rate, der Menge der Informationsbits des ersten Teils der CSI und der Modulationsreihenfolge des ersten Teils der CSI.

3. CSI-Übertragungsverfahren nach Anspruch 1, bei welchem das Bestimmen der Menge von Ressourcenelementen, REs, die für die Übertragung des ersten Teils der CSI auf dem PUSCH verfügbar ist, entsprechend der von dem ersten Teil der CSI verwendeten Ziel-Code-Rate, der Menge der Informationsbits des ersten Teils der CSI und der Modulationsreihenfolge des ersten Teils der CSI, den folgenden Schritt aufweist:

Bestimmen der Menge an REs, die für die Übertragung des ersten Teils der CSI auf dem PUSCH erforderlich ist, durch eine erste Formel

$$N_{\mathrm{RE}}^{\mathrm{CSI\text{-}part1}} = \left\lceil \frac{O_{CSI-part1}}{R_{T\arg et} * Q_m} \right\rceil,$$

wobei $N_{\mathrm{RE}}^{\mathrm{CSI\text{-}part1}}$ die Menge der für die Übertragung des ersten Teils der CSI verfügbaren REs auf dem PUSCH angibt, $O_{CSI\text{-}part1}$ die Menge der Informationsbits des ersten Teils der CSI angibt, $R_{T\,arget}$ die von dem ersten Teil der CSI verwendete Ziel-Code-Rate angibt, and $Q_m$ die Modulationsreihenfolge des ersten Teils der CSI angibt.

4. CSI-Übertragungsverfahren nach Anspruch 2 oder 3, bei welchem das Bestimmen der verfügbaren Ressource auf dem PUSCH, die von der für die Übertragung des ersten Teils der CSI verfügbaren Ressource verschieden ist, als die für die Übertragung des zweiten Teils der CSI auf dem PUSCH verfügbare Ressource den folgenden Schritt aufweist:
Bestimmen der Menge von REs, die für die Übertragung des zweiten Teils der CSI auf dem PUSCH verfügbar ist, entsprechend der Menge der REs, die für die Übertragung von Uplink-Control-Informationen, UCI, auf dem PUSCH verfügbar ist und der Menge der REs, die für die Übertragung des ersten Teils der CSI auf dem PUSCH verfügbar ist.

5. CSI-Übertragungsverfahren nach Anspruch 4, bei welchem das Bestimmen der Menge von REs, die für die Übertragung des zweiten Teils der CSI auf dem PUSCH verfügbar ist, entsprechend der Menge der REs, die für die Übertragung von Uplink-Control-Informationen, UCI, auf dem PUSCH verfügbar ist und der Menge der REs, die für die Übertragung des ersten Teils der CSI auf dem PUSCH verfügbar ist, den folgenden Schritt aufweist:

Bestimmen der Menge der REs, die für die Übertragung des zweiten Teils der CSI auf dem PUSCH verfügbar ist, durch eine zweite Formel

$$N_{\mathrm{RE}}^{\mathrm{CSI\text{-}part2}} = N_{RE}^{PUSCH} - N_{\mathrm{RE}}^{\mathrm{CSI\text{-}part1}} - N_{\mathrm{RE}}^{\mathrm{HARQ\text{-}ACK}},$$

wobei $N_{\mathrm{RE}}^{\mathrm{CSI\text{-}part2}}$ die Menge der REs, die für die Übertragung des zweiten Teils der CSI auf dem PUSCH verfügbar ist, angibt, $N_{RE}^{PUSCH}$ die Menge der REs, die für die Übertragung der UCI auf dem PUSCH verfügbar ist, angibt, $N_{\mathrm{RE}}^{\mathrm{CSI\text{-}part1}}$ die Menge der REs, die für die Übertragung des ersten Teils der CSI auf dem PUSCH verfügbar ist, angibt, und $N_{\mathrm{RE}}^{\mathrm{HARQ\text{-}ACK}}$ die Menge der REs, die für die Übertragung einer HARQ-Quittierung, HARQ-ACK, auf dem PUSCH verfügbar ist, angibt.

6. CSI-Übertragungsverfahren nach Anspruch 5, bei welchem die Menge $N_{RE}^{PUSCH}$ der REs, die für die Übertragung

$$N_{\mathrm{RE}}^{\mathrm{PUSCH}} = \sum_{l=0}^{N_{\mathrm{symb,all}}^{\mathrm{PUSCH}} - n} M_{\mathrm{sc}}^{\Phi^{\mathrm{UCI}}}(l)$$

der UCI auf dem PUSCH verfügbar ist, mittels der Formel berechnet wird,

wobei $N_{RE}^{PUSCH}$ die Menge der REs angibt, die für die Übertragung der UCI auf dem PUSCH verfügbar ist, $M_{\mathrm{sc}}^{\Phi^{\mathrm{UCI}}}(l)$ die Menge der REs angibt, die für die Übertragung der UCI auf einem orthogonalen Frequenzmultiplex(OFDM)-symbol $l$ verfügbar ist, $N_{symb,all}^{PUSCH}$ die Menge an OFDM-Symbolen in dem PUSCH angibt, und $n$ die Menge der OFDM-Symbole angibt, die in dem PUSCH von einem Demodulationsreferenzsignal, DMRS, belegt sind.

7. CSI-Übertragungsverfahren nach Anspruch 3, bei welchem nach dem Bestimmen der Menge der REs, die für die Übertragung des ersten Teils der CSI auf dem PUSCH verfügbar ist, das CSI-Übertragungsverfahren ferner die folgenden Schritte aufweist:
wenn die durch die erste Formel berechnete Menge der REs, die für die Übertragung des ersten Teils der CSI auf dem PUSCH erforderlich ist, größer als die Menge der REs ist, die für die Übertragung der UCI auf dem PUSH verfügbar ist, Bestimmen der REs, welche für die Übertragung der UCI auf dem PUSCH verfügbar ist, als die für die Übertragung des ersten Teils der CSI verfügbaren REs, und Feststellen, dass kein RE für die Übertragung des zweiten Teils der CSI auf dem PUSCH vorhanden ist.

8. CSI-Übertragungsverfahren nach Anspruch 1, bei welchem das CSI-Übertragungsverfahren vor dem Bestimmen der für die Übertragung des ersten Teils der CSI auf dem PUSCH verfügbaren Ressource entsprechend einer Ziel-Code-Rate, die von dem ersten Teil der CSI verwendet wird, ferner die folgenden Schritte aufweist:

> Empfangen der von der Basisstation übertragenen DCI;
> Parsen der DCI, um zu bestimmen, dass lediglich die CSI, anstelle von Daten, über den PUSCH übertragen werden.

9. CSI-Übertragungsverfahren nach Anspruch 1, bei welchem das CSI-Übertragungsverfahren nach dem das Bestimmen der verfügbaren Ressource auf dem PUSCH, die von der für die Übertragung des ersten Teils der CSI verfügbaren Ressource verschieden ist, als die für die Übertragung des zweiten Teils der CSI auf dem PUSCH verfügbare Ressource, ferner die folgenden Schritte aufweist:

> Erfassen eines Code-Raten-Schwellenwerts des zweiten Teils der CSI;
> Bestimmen der Menge der Bits des zweiten Teils der CSI, welche über die für die Übertragung des zweiten Teils der CSI auf dem PUSCH verfügbare Ressource übertragbar ist, entsprechend dem Code-Raten-Schwellenwert des zweiten Teils der CSI.

10. CSI-Übertragungsverfahren nach Anspruch 9, bei welchem Erfassen eines Code-Raten-Schwellenwerts des zweiten Teils der CSI den folgenden Schritt aufweist:

> Bestimmen des Code-Raten-Schwellenwerts des zweiten Teils der CSI durch eine dritte Formel

$$R_{Threshold}^{CSI,2} = \frac{R_{T\arg et}^{CSI,1} * \beta_{\text{offset}}^{CSI,1}}{\beta_{\text{offset}}^{CSI,2}},$$

wobei $R_{Threshold}^{CSI,2}$ den Code-Raten-Schwellenwert des zweiten Teils der CSI angibt, $R_{T\arg et}^{CSI,1}$ die von dem ersten Teil der CSI verwendete Ziel-Code-Rate angibt , $\beta_{\text{offset}}^{CSI,1}$ ein Code-Raten-Offset des ersten Teils der CSI angibt, und $\beta_{\text{offset}}^{CSI,2}$ ein Code-Raten-Offset des zweiten Teils der CSI angibt.

11. CSI-Übertragungsverfahren nach Anspruch 9, bei welchem das Bestimmen der Menge der Bits des zweiten Teils der CSI, welche über die für die Übertragung des zweiten Teils der CSI auf dem PUSCH verfügbare Ressource übertragbar ist, entsprechend dem Code-Raten-Schwellenwert des zweiten Teils der CSI, die folgenden Schritte aufweist:

> wenn eine tatsächliche Code-Rate, die dem zweiten Teil der CSI entspricht, geringer als oder gleich dem Code-Raten-Schwellenwert des zweiten Teils der CSI ist, Bestimmen der Menge der Bits des zweiten Teils der CSI, welche durch die für die Übertragung des zweiten Teils der CSI verfügbare Ressource übertragbar ist, als die Gesamtmenge der Bits des zweiten Teils der CSI;
> wenn die tatsächliche Code-Rate, die dem zweiten Teil der CSI entspricht, grö-βer als der Code-Raten-Schwellenwert des zweiten Teils der CSI ist, Verwerfen des zweiten Teils der CSI entsprechend einer vorbestimmten Regel, bis eine tatsächliche Code-Rate, die dem verbleibenden zweiten Teil der CSI entspricht, kleiner als oder gleich dem Code-Raten-Schwellenwert des zweiten Teils der CSI ist, und Bestimmen der Menge der Bits des zweiten Teils der CSI, welche durch die für die Übertragung des zweiten Teils der CSI verfügbare Ressource übertragbar ist, als die Menge der Bits des verbleibenden zweiten Teils der CSI.

12. User-Gerät, UE, das dazu ausgebildet ist, eine Kanalzustandsinformation(CSI)-Übertragungsressource zu bestimmen, wobei die CSI einen ersten Teil und einen zweiten Teil aufweist, wobei das UE aufweist:

> ein erstes Bestimmungsmodul (41), das dazu ausgebildet ist, eine für die Übertragung des ersten Teils der CSI auf einem Physical Uplink Shared Channel, PUSCH, ohne Uplink Shared Channel, UL-SCH, verfügbare Ressource entsprechend einer Ziel-Code-Rate, die von dem ersten Teil der CSI verwendet wird, zu bestimmen, ein zweites Bestimmungsmodul, das dazu ausgebildet ist, eine verfügbare Ressource auf dem PUSCH, die von der für die Übertragung des ersten Teils der CSI verfügbaren Ressource verschieden ist, als eine für die Übertragung des zweiten Teils der CSI auf dem PUSCH verfügbare Ressource zu bestimmen, ein Erfassungsmodul, das zum Erfassen der von dem ersten Teil der CSI verwendeten Ziel-Code-Rate ausgebildet ist,

wobei das Erfassungsmodul aufweist:

ein Erfassungs-Submodul, das dazu ausgebildet ist, in einem Protokoll, einer Gruppe von Code-Raten vorzudefinieren, welche von dem ersten Teil der CSI verwendbar sind, Downlink Control-Informationen, DCI, zu empfangen, die geeignet sind, das UE zum Übertragen des ersten Teils der CSI zu triggern, und eine Code-Rate in der Gruppe von Code-Raten als die von dem ersten Teil der CSI verwendete Ziel-Code-Rate gemäß Indikationsinformationen in einem spezifischen Indikationsfeld der DCI zu bestimmen, wobei die Gruppe von Code-Raten zwei oder mehr Code-Raten aufweist, wobei das UE **dadurch gekennzeichnet ist, dass** das spezifische Indikationsfeld der DCI ein Hybrid Automatic Repeat reQuest(HARQ)-Prozessnummerindikati-onsinformationsfeld ist.

## Revendications

1. Procédé de transmission d'informations d'état de canal, CSI, au niveau d'un équipement utilisateur, UE, les CSI comprenant une première partie et une seconde partie, le procédé de transmission CSI comprenant :

la détermination (11) d'une ressource disponible pour une transmission de la première partie des CSI sur un canal partagé de liaison montante physique, PUSCH, sans canal partagé de liaison montante, UL-SCH, conformément à un débit de code cible utilisé par la première partie des CSI ;
la détermination (12) d'une ressource disponible sur le PUSCH autre que la ressource disponible pour la transmission de la première partie des CSI en tant que ressource disponible pour la transmission de la seconde partie des CSI sur le PUSCH,
avant la détermination de la ressource disponible pour la transmission de la première partie des CSI sur le PUSCH conformément au débit de code cible utilisé par la première partie des CSI, le procédé de transmission des CSI comprenant en outre :
l'acquisition du débit de code cible utilisé par la première partie des CSI,
l'acquisition du débit de code cible utilisé par la première partie des CSI comprenant :
la prédéfinition dans un protocole d'un ensemble de débits de code susceptibles d'être utilisés par la première partie des CSI, la réception de DCI susceptibles de déclencher l'UE pour transmettre la première partie des CSI, et la détermination d'un débit de code dans l'ensemble de débits de code en tant que débit de code cible utilisé par la première partie des CSI conformément à des informations d'indication dans un champ d'indication spécifique des DCI, l'ensemble de débits de code comprenant deux débits de code ou plus, ledit procédé étant **caractérisé en ce que** le champ d'indication spécifique des DCI est un champ d'informations d'indication de numéro de processus de demande de répétition automatique hybride, HARQ.

2. Procédé de transmission de CSI selon la revendication 1, dans lequel la détermination de la ressource disponible pour la transmission de la première partie des CSI sur le PUSCH conformément au débit de code cible utilisé par la première partie des CSI comprend :
la détermination de la quantité d'éléments de ressources, RE, disponible pour la transmission de la première partie des CSI sur le PUSCH conformément au débit de code cible utilisé par la première partie des CSI, la quantité de bits d'informations de la première partie des CSI et l'ordre de modulation de la première partie des CSI

3. Procédé de transmission de CSI selon la revendication 1, dans lequel la détermination de la quantité des RE disponible pour la transmission de la première partie des CSI sur le PUSCH conformément au débit de code cible utilisé par la première partie des CSI, la quantité de bits d'informations de la première partie des CSI et l'ordre de modulation de la première partie des CSI comprend :

la détermination de la quantité des RE requise pour la transmission de la première partie des CSI sur le PUSCH à travers une première formule

$$N_{RE}^{CSI-part1} = \left\lceil \frac{O_{CSI-part1}}{R_{T\,arg\,et}* Q_m} \right\rceil,$$

où $N_{RE}^{CSI-part1}$ représente la quantité des RE disponible pour la transmission de la première partie des CSI sur le PUSCH, $O_{CSI-part1}$ représente la quantité de bits d'informations de la première partie des CSI, $R_{T\,arg\,et}$ représente le débit de code cible utilisé par la première partie des CSI, et $Q_m$ représente l'ordre de modulation de la première partie des CSI.

4. Procédé de transmission de CSI selon la revendication 2 ou 3, dans lequel la détermination de la ressource disponible sur le PUSCH autre que la ressource disponible pour la transmission de la première partie des CSI en tant que ressource disponible pour la transmission de la seconde partie des CSI sur le PUSCH comprend :
la détermination de la quantité de RE disponible pour la transmission de la seconde partie des CSI sur le PUSCH conformément à la quantité de RE **disponible pour la transmission d'informations de commande de liaison montante,** UCI, sur le PUSCH et la quantité de RE disponible pour la transmission de la première partie des CSI sur le PUSCH.

5. Procédé de transmission de CSI selon la revendication 4, dans lequel la détermination de la quantité de RE disponible pour la transmission de la seconde partie des CSI sur le PUSCH conformément à la quantité de RE disponible pour la **transmission d'UCI sur le PUSCH et la quantité de RE disponible pour la** transmission de la première partie des CSI sur le PUSCH comprend :

la détermination de la quantité de RE disponible pour la transmission de la seconde partie des CSI sur le PUSCH à travers une deuxième formule

$$N_{RE}^{CSI-part2} = N_{RE}^{PUSCH} - N_{RE}^{CSI-part2} - N_{RE}^{HARQ-ACK},$$

où $N_{RE}^{CSI-part2}$ représente la quantité de RE disponible pour la transmission de la seconde partie des CSI sur le PUSCH, $N_{RE}^{PUSCH}$ représente la quantité de RE disponible pour la transmission des UCI sur le PUSCH, $N_{RE}^{CSI-part1}$ représente la quantité de RE disponible pour la transmission de la première partie des CSI sur le PUSCH, et $N_{RE}^{HARQ-ACK}$ représente la quantité de RE disponible **pour la transmission d'un accusé de réception HARQ, HARQ**-ACK, sur le PUSCH.

6. Procédé de transmission de CSI selon la revendication 5, dans lequel la quantité de $N_{RE}^{PUSCH}$ des RE disponible pour la transmission des UCI sur le PUSCH est calculée selon une formule

$$N_{RE}^{PUSCH} = \sum_{l=0}^{N_{symb,tout}^{PUSCH}-n} M_{sc}^{\Phi^{UCI}} (l),$$

où $N_{RE}^{PUSCH}$ représente la quantité de RE disponible pour la transmission des UCI sur le PUSCH, $M_{sc}^{\Phi^{UCI}}$ représente la quantité de RE disponible pour la transmission des UCI sur un symbole de multiplexage par répartition orthogonale de la fréquence, MROF, $l$, $N_{symb,tout}^{PUSCH}$ >> représente la quantité de symboles MROF dans le PUSCH, et n représente la quantité de symboles MROF occupés par un signal de référence de démodulation, DMRS, dans le PUSCH.

7. Procédé de transmission de CSI selon la revendication 3, dans lequel, après la détermination de la quantité de RE disponible pour la transmission de la première partie des CSI sur le PUSCH, le procédé de transmission de CSI comprend en outre :
lorsque la quantité de RE requise pour la transmission de la première partie des CSI sur le PUSCH calculée selon la première formule est supérieure à la quantité de RE disponible pour la transmission des UCI sur le PUSCH, la détermination des RE disponibles pour la transmission des UCI sur le PUSCH en tant que RE disponibles pour la transmission de la première partie des CSI, et la détermination du fait qu'il n'y a pas de RE disponible pour la transmission de la seconde partie des CSI sur le PUSCH.

8. Procédé de transmission de CSI selon la revendication 1, dans lequel, avant la détermination de la ressource disponible pour la transmission de la première partie des CSI sur le PUSCH conformément au débit de code cible utilisé par la première partie des CSI, le procédé de transmission de CSI comprend en outre :

   la réception des DCI transmises par la station de base ;
   l'analyse des DCI pour déterminer que seules les CSI, plutôt que des données, sont transmises à travers le PUSCH.

9. Procédé de transmission de CSI selon la revendication 1, dans lequel, après la détermination de la ressource disponible sur le PUSCH autre que la ressource disponible pour la transmission de la première partie des CSI en tant que ressource disponible pour la transmission de la seconde partie des CSI sur le PUSCH, le procédé de transmission de CSI comprend en outre :

   l'acquisition d'un seuil de débit de code de la seconde partie des CSI ;
   la détermination de la quantité de bits de la seconde partie des CSI susceptibles d'être transmises à travers la ressource disponible pour la transmission de la seconde partie des CSI sur le PUSCH conformément au seuil de débit de code de la seconde partie des CSI.

10. Procédé de transmission de CSI selon la revendication 9, dans lequel l'acquisition du seuil de débit de code de la seconde partie des CSI comprend :

   la détermination du seuil de débit de code de la seconde partie des CSI à travers une troisième formule

$$R_{Seuil}^{CSI,2} = \frac{R_{T\,arg\,et}^{CSI,1} * \boldsymbol{\beta}_{décalage}^{CSI,1}}{\boldsymbol{\beta}_{décalage}^{CSI,2}}$$

où $R_{Seuil}^{CSI,2}$ représente le seuil de débit de code de la seconde partie des CSI, $R_{T\,arg\,et}^{CSI,1}$ représente le débit de code cible utilisé par la première partie des CSI, $\boldsymbol{\beta}_{décalage}^{CSI,1}$ représente un décalage de débit de code de la première partie des CSI, et $\boldsymbol{\beta}_{décalage}^{CSI,2}$ représente un décalage de débit de code de la seconde partie des CSI.

11. Procédé de transmission de CSI selon la revendication 9, dans lequel la détermination de la quantité de bits de la seconde partie des CSI susceptibles d'être transmises à travers la ressource disponible pour la transmission de la seconde partie des CSI sur le PUSCH conformément au seuil de débit de code de la seconde partie des CSI comprend :

   quand un débit de code réel correspondant à la seconde partie des CSI est inférieur ou égal au seuil de débit de code de la seconde partie des CSI, la **détermination de la quantité de bits de la seconde partie des CSI capables d'être** transmises à travers la ressource disponible pour la transmission de la seconde partie des CSI en tant que quantité totale de bits de la seconde partie des CSI ;
   lorsque le débit réel de code correspondant à la seconde partie des CSI est supérieur au seuil de débit de code de la seconde partie des CSI, le rejet de la **seconde partie des CSI conformément à une règle prédéterminée jusqu'à ce qu'un** débit de code réel correspondant à la seconde partie restante des CSI soit inférieur ou égal au seuil de débit de code de la seconde partie des CSI, et la **détermination de la quantité de bits de la seconde partie des CSI capables d'être** transmises à travers la ressource disponible pour la transmission de la seconde partie des CSI en tant que quantité de bits de la seconde partie restante des CSI ;

12. Équipement utilisateur, UE, conçu pour déterminer une ressource de transmission d'informations d'état de canal, CSI, comprenant une première partie et une seconde partie, l'UE comprenant :

un premier module de détermination (41) configuré pour déterminer une ressource disponible pour la transmission de la première partie des CSI sur un canal partagé de liaison montante physique, PUSCH, sans canal partagé de liaison montante, UL-SCH, conformément à un débit de code cible utilisé par la première partie des CSI ;

un second module de détermination (42) configuré pour déterminer une ressource disponible sur le PUSCH autre que la ressource disponible pour la transmission de la première partie des CSI en tant que ressource disponible pour une transmission de la seconde partie des CSI sur le PUSCH ;

**un module d'acquisition, configuré pour acquérir le débit de code cible** utilisé par la première partie des CSI, **le module d'acquisition comprenant** :

un sous-**module d'acquisition configuré pour prédéfinir dans un protocole** un ensemble de débits de code pouvant être utilisés par la première partie des CSI, recevoir des informations de commande de liaison descendante, DCI, **capables de déclencher l'UE pour transmettre la première partie des CSI, et déterminer un débit de code dans l'ensemble de débits de code en tant que débit** de code cible utilisé par la première partie des CSI conformément à des informations **d'indication dans un champ d'indication spécifique des DCI, l'ensemble de débits de code comprenant deux ou plusieurs débits de code ;** ledit UE étant **caractérisé en ce que** le champ d'indication spécifique des DCI est un champ d'informations d'indication de numéro de processus de demande de répétition automatique hybride, HARQ.

determining a resource available for the transmission of the first part of the CSI on a PUSCH in accordance with a target code rate used by the first part of the CSI — 11

determining an available resource on the PUSCH other than the resource available for the transmission of the first part of the CSI as a resource available for the transmission of the second part of the CSI on the PUSCH — 12

Fig.1

Fig.2

Fig.3

Fig.4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- 3rd Generation Partnership Project; Technical Specification Group Radio Access Network; NR; Multiplexing and channel coding (Release 15). *3GPP STANDARD; TECHNICAL SPECIFICATION; 3GPP TS 38.212, 3RD GENERATION PARTNERSHIP PROJECT (3GPP), MOBILE COMPETENCE CENTRE; 650, ROUTE DES LUCIOLES ; F-06921 SOPHIA-ANTIPOLIS CEDEX ; FRANCE,* 15 December 2017, vol. RAN WG1, 1-82

- **SAMSUNG.** Remaining Issues for UCI Multiplexing in PUSCH. *3GPP DRAFT; R1-1720332 UCI ON PUSCH, 3RD GENERATION PARTNERSHIP PROJECT (3GPP)*